# EUROPÄISCHE PATENTSCHRIFT

(11) **EP 0 830 060 B1**
(45) Veröffentlichungstag und Bekanntmachung des Hinweises auf die Patenterteilung: **23.07.2003**
(21) Anmeldenummer: 97902273.8
(22) Anmeldetag: 31.01.1997
(51) Int. Cl.: A01N 31/02

(54) **HÄNDEDESINFEKTIONSMITTEL**
HAND DISINFECTANT
AGENT DESINFECTANT POUR LES MAINS

(30) Priorität: 27.03.1996 DE 19612057
(43) Veröffentlichungstag der Anmeldung: 25.03.1998
(73) Patentinhaber: Antiseptica Chemisch-Pharmazeutische Produkte Gmbh, 50259 Pulheim (DE)
(72) Erfinder: KRAMER, Axel Institut für Hygiene, D-17487 Greifswald (DE); DÖHNER, Leopold, D-17489 Greifswald (DE)
(74) Vertreter: Siewers, Gescha, Dr.
(86) Internationale Anmeldenummer: EP9700417
(87) Internationale Veröffentlichungsnummer: WO97035475

(56) Entgegenhaltungen:
- EP-A- 0 251 303
- EP-A- 0 252 278
- EP-A- 0 384 126
- EP-A- 0 547 727
- EP-A- 0 689 767
- EP-A- 0 689 768
- WO-A-93/07250
- WO-A-95/02393
- DE-A- 1 492 024
- DE-A- 2 904 217
- DE-A- 3 117 792
- DE-A- 3 723 990
- DE-A- 3 725 381
- DE-U- 29 514 293
- GB-A- 2 231 496
- US-A- 5 213 803

## Beschreibung

Die Erfindung betrifft Händedesinfektionsmittel auf Basis von Alkoholen.

Händedesinfektionsmittel mit einem Gehalt an einem oder mehreren der niederen Alkanole wie Ethanol, Isopropanol oder n-Propanol sind allgemein bekannt. Es handelt sich in der Regel um wäßrige Lösungen mit einem Gehalt an 70 - 80 Gew.-% Alkoholen, ggf. unter Zusatz weiterer microbizid wirkender Verbindungen. Diese bekannten Händedesinfektionsmittel erfüllen die von der DGHM formulierten Anforderungen bezüglich des germiziden Effektes gegenüber Bakterien einschließlich Mykobakterien und Pilzen.

Zunehmend ist in der letzten Zeit die Viruswirksamkeit von Händedesinfektionsmitteln auf Basis von Alkoholen diskutiert worden. Die Virusinaktivierung, insbesondere gegenüber hochresistenten Virustypen wie Polio entspricht nicht allen Anforderungen; so ist bekannt, daß sich beispielsweise Polioviren nur mit sehr hochprozentigem Ethanol inaktivieren lassen, so daß die übliche Konzentration zwischen etwa 70 - 80 Gew.-% für diesen Zweck nicht ausreichend ist. Es sind daher bereits Händedesinfektionsmittel auf Basis von 90 - 95 %-igem Ethanol im Handel. Diese Desinfektionsmittel entsprechen den Anforderungen an die Virusinaktivierung der DVV, aber sie haben einige entscheidende Nachteile. Der wichtigste Nachteil ist, daß der Flammpunkt solcher Mischungen mit hohem Ethanolgehalt unter 21°C liegt und die Zubereitungen daher nach der Verordnung über brennbare Flüssigkeiten der Gefahrenklasse BI zugeordnet werden und daher für Transport, Lagerung, Abfüllung und ähnliches besondere Vorschriften zu beachten sind. Dies macht besonders Kliniken und großen Arztpraxen zu schaffen, denn Desinfektionsmittel werden in großen Mengen benötigt und allgemein sind die Lagerräume der entsprechenden Institution nicht auf die Lagerung größerer Mengen brennbarer Flüssigkeiten dieser Gefahrenklasse eingerichtet. Ein weiterer Nachteil besteht darin, daß Desinfektionsmittel mit einem so hohen Alkoholgehalt bei der Handdesinfektion zu einer außergewöhnlich starken Entfettung der Haut führen mit allen bekannten Nebenwirkungen. So ist aus der WO-A-9502393 die Verwendung von niederen Alkanolen wie Ethanol zusammen mit Diolen bekannt, wobei diese Desinfektionsmittel einen Gehalt an 65 bis 75 Gew.-% Monoalkoholen was etwa 72 bis 81 Vol.-% Monoalkoholen entspricht und weniger als 20 Gew.-% Wasser aufweisen. Derartige Mischungen haben regelmäßig einen Flammpunkt von unter 21°C aufgrund des hohen Gehaltes an leicht flüchtigen Monoalkoholen. Die DE-A-2902217 offenbart Händedesinfektionsmittel auf Basis von Alkohlen, die niedrige Alkohole zusammen mit Wasserstoffperoxid enthalten. Aus der DE-A-3117792 sind Desinfektionsmittel zur Verwendung auf der Haut bekannt, die 3 bis 55 % ein- oder mehrwertige Alkohole und als microbizid wirksame Verbindungen bestimmte Phenole enthalten. Weiterhin sind aus der DE-U-29514293 Desinfektionsmittel bekannt, die aus einer Mischung aus 15 bis 25 Gew.-% 1,3-Butandiol in einem Monoalkohol, insbesondere 2-Propanol, bestehen, wobei diese Mischungen höchstens 10 Gew.-% Wasser enthalten sollen, so daß auch hier aufgrund des Gehaltes an Monoalkohol ein Flammpunkt von unter 21°C vorliegt. Die WO-A-9307250 offenbart Händedesinfektionsmittel auf Basis von Monoalkoholen, die aber zwingend bestimmte amphotere Tenside als Synergisten enthalten müssen. Weiterhin ist aus der EP-A-252278 ein Desinfektionsmittel bekannt, das Alkohole, Wasserstoffperoxid, eine oder mehrere Carbonsäuren, eine oder mehrere microbizid wirksame stickstoffhaltige organische Verbindungen und eine oder mehrere microbizid wirksame phenolische Verbindungen enthalten muß. Die DE-A-3723990 betrifft microbizide Zubereitungen aus Monoalkoholen, Wasser, Diolen und halogenierten Hydroxydiphenylethern, Aryloxyalkanolen und bestimmten Tensiden. Es liegt also ein komplexes Gemisch vor, das eine Vielzahl von Bestandteilen zwingend enthalten muß.

Es besteht daher noch ein dringender Bedarf nach Händedesinfektionsmitteln mit einer guten virusinaktivierenden Wirksamkeit auch bei bekannt resistenten Virustypen, die aber nicht in die Gefahrenklasse Bl der Verordnung über brennbare Flüssigkeiten fallen und die außerdem über eine gute Verträglichkeit verfügen.

Zur Lösung der Aufgabe werden Händedesinfektionsmittel auf der Basis von niederen Monoalkoholen mit Synergisten vorgeschlagen, die gekennzeichnet sind durch eine wäßrige, 50 bis 60 Vol.-%ige Lösung eines Monoalkohols, ausgewählt aus Ethanol und/oder n-Propanol, mit einem oder mehreren Synergisten aus der Gruppe der Diole oder Salze der Thiocyansäure und mit einem Flammpunkt von über 21°C.

Überraschenderweise hat sich herausgestellt, daß man anstelle der bisher üblichen hochprozentigen Ethanollösungen zur viruziden Händedesinfektion auch solche Zubereitungen einsetzen kann, die einen wesentlich niedrigeren Alkoholgehalt in Form von niederen Alkoholen aufweisen, wenn diese Mischungen Synergisten beinhalten, die die Viruzidie bzw. Virusinaktivierung der Alkohole fördern, so daß Mischungen herstellbar sind, die nicht mehr unter die Gefahrenklasse BI der VbF fallen. Verwendbar sind vorzugsweise die niederen Alkanole, also Ethanol, Isopropanol oder n-Propanol, die im hochkonzentrierten Zustand Flammpunkte unter 21°C aufweisen, die aber vorzugsweise in einer solchen wäßrigen Verdünnung eingesetzt werden, daß der Gesamtalkoholgehalt zwischen etwa 50 - 60 Vol.% liegt.

Zur Erhöhung der viruziden bzw. virusinaktivierenden Wirkung werden Diole eingesetzt, und zwar vorzugsweise solche mit 3 - 5 C-Atomen Kettenlänge. Besonders geeignet sind entweder Propandiole, wobei beide Stellungsisomere, also Propandiol - 1,2 und Propandiol - 1,3 eingesetzt werden können. Propandiol - 1,2 gilt als praktisch untoxisch und wird in großem Umfang in der Nahrungsmittelindustrie und im Pharmabereich eingesetzt. Propandiol - 1,3 gilt als unbedenklich, obgleich nach neueren Untersuchungen die Tozidität etwas höher als bei dem 1,2 - Isomeren liegen soll. Neben den Propandiolen kommen auch die Butandiole in Betracht, und zwar alle Stellungsisomeren, wobei aber Butandiol - 1,3 bevorzugt wird, da für diese Substanz die meisten toxikologischen Daten vorliegen.

Die Diole haben eine gewisse bakteriostatische Wirkung und außerdem werden sie in der Lebensmittelindustrie beispielsweise gegen Pilze, insbesondere gegen Hefen eingesetzt. Die Konzentration der Diole kann niedrig sein und bewegt sich im Bereich von etwa 3 - 10 Vol.%.
Eine weitere gut wirksame synergistische Verbindung ist die Substanz Natriumrhodanid NaSCN. Es ist zwar bekannt, daß Thiocyansäure und deren Salze microbizid wirksam sind, aber diese Aktivität wird bisher kaum für Desinfektionszwecke ausgenutzt. Die Konzentration an Rhodanid sollte etwa zwischen 1 - 3 Gewichts % liegen.

Die erfingungsgemäßen Mischungen werden sauer eingestellt, was durch Zugabe von hautverträglichen, physiologisch unbedenklichen organischen Säuren in einer Konzentration von etwa 0,001 - 0,005 Mol.% geschehen kann. Vorzugsweise werden Zitronensäure, Weinsäure, Malonsäure oder Apfelsäure eingesetzt, da diese keinen Eigengeruch aufweisen. Es können aber auch andere toxikologisch unbedenkliche Säuren genutzt werden wie Milchsäure, Essigsäure, Ameisensäure oder Propionsäure und ähnliche Verbindungen.

Die erfindungsgemäßen Mischungen weisen Flammpunkte über 21° C auf und unterliegen daher nicht den verschärften Bedingungen der Substanzen der Gefahrenklasse B1. Sie sind deutlich besser hautverträglich als Präparate mit einem sehr hohen Anteil an Alkoholen, da die Entfettung der Haut nicht in dem Maße wie bei hochalkoholischen Lösungen eintritt. Ihre Wirksamkeit gegen Bakterien, Hefen und Pilzen entspricht den Vorschriften der DVV bzw. des BfArM. Darüber hinaus erfüllen sie aber auch die Anforderungen an die virusinaktivierende Wirksamkeit entsprechend den Vorschriften der DGHM.
Die Herstellung der erfindungsgemäßen Desinfektionsmittel erfolgt in an sich bekannter Weise durch Auflösen der meist festen organischen Säuren und durch Auflösen der synergistisch wirksamen Verbindungen wie Alkansulfonate oder Rhodanid in einem Teil des insgesamt benötigten Wassers, Vermischen der flüssigen Alkohole und Zugabe der insgesamt erforderlichen Wassermenge.

Im folgenden wird die Erfindung anhand der Beispiele näher erläutert:

### Beispiel 1

6 l Ethanol 96 %-ig werden mit 500 ml Propandiol - 1,2 und 500 ml Butandiol - 1,3 versetzt und sorgfältig durchmischt. In diese Mischung wird eine wäßrige Lösung von 200 ml 1 molarer Zitronensäure eingearbeitet und die Mischung dann mit 2,8 l doppelt destilliertem Wasser verdünnt. Der Flammpunkt, bestimmt nach DIN 51755, beträgt 22,5° C.

### Beispiel 2

6 l Ethanol 96%ig, werden, wie in Beispiel 1 angegeben, mit 500 ml Propandiol - 1,2 und 500 ml Butandiol - 1,2 sowie 200 ml einer 1 molaren Weinsäurelösung versetzt und mit 2,8 I destilliertem Wasser verdünnt. Der Flammpunkt der Mischung beträgt, bestimmt nach DIN 51755, 23,0° C.

### Beispiel 3

Wie in Beispiel 1 beschrieben, werden 6 I Ethanol 96 %-ig, 1 l Propandiol-1,2, 1 I Butandiol - 1,3 und 200 ml 1 molare Zitronensäure vermischt und mit Wasser auf 10 aufgefüllt.

### Beispiel 4

6 I Ethanol 96 %-ig, 3 I Propandiol - 1,2 und 200 ml 1 molare Apfelsäure werden gemischt und mit Wasser auf 10 I aufgefüllt.

### Beispiel 5

6 l Ethanol 96%-ig werden mit 1 I n-Propanol, 500 ml Propandiol-1,2 und 500 ml Butandiol-1,3 versetzt und sorgfältig durchmischt. In diese Mischung wird dann eine wäßrige Lösung von 200 ml 1 molarer Zitronensäure eingearbeitet und die Lösung dann mit 1,8 I doppelt destilliertem Wasser verdünnt.

Der Flammpunkt bestimmt nach DIN 51755 beträgt 22°C.

## Patentansprüche

1. Händedesinfektionsmittel auf der Basis von niederen Monoalkohlen mit Synergisten, **gekennzeichnet durch** eine wäßrige, 50 bis 60 Vol.-%ige Lösung eines Monoalkohols, ausgewählt aus Ethanol und/oder n-Propanol, mit einem oder mehreren Synergisten aus der Gruppe der Diole oder Salze der Thiocyansäure und mit einem Flammpunkt von über 21°C.

2. Händedesinfektionsmittel nach Anspruch 1, **gekennzeichnet durch** einen Gehalt an Ethanol von etwa 57 Vol.-%.

3. Händedesinfektionsmittel nach Anspruch 1 oder 2, **gekennzeichnet durch** einen Gehalt an Propan- und/oder Butandiolen.

4. Händedesinfektionsmittel nach Anspruch 1 bis 3, **gekennzeichnet durch** einen Gehalt an Propandiol-1,2 und/oder Butandiol-1,3.

5. Händedesinfektionsmittel nach Anspruch 1 bis 4, **gekennzeichnet durch** einen Gehalt an etwa 5 bis 10 Vol.-% Diolen oder etwa 1-3 Gew.-% Salze der Thiocyansäure.

6. Händedesinfektionsmittel nach Anspruch 1 bis 5, **gekennzeichnet durch** einen Gehalt an organischen, physiologisch unbedenklichen Säuren.

7. Händedesinfektionsmittel nach Anspruch 6, **gekennzeichnet durch** einen Gehalt an etwa 0,01 bis 0,05 Mol.-% organischer Säuren.

## Claims

1. A hand disinfectant based on low monoalcohols with synergists, **characterised by** an aqueous, 50 to 60 vol.-% solution of a monoalcohol selected from ethanol and/or n-propanol, with one or more synergists from the group of the diols or salts of thiocyanic acid and with a flashpoint higher than 21°C.

2. A hand disinfectant according to Claim 1, **characterised by** an ethanol content of about 57 % by vol.

3. A hand disinfectant according to Claim 1 or 2, **characterised by** a content of propane diols and/or butane diols.

4. A hand disinfectant according to Claims 1 to 3, **characterised by** a content of 1,2-propane diol and/or 1,3-butane diol.

5. A hand disinfectant according to Claims 1 to 4, **characterised by** a content of about 5 to 10 vol.-% diols or of about 1 to 3 weight % salts of thiocyanic acid.

6. A hand disinfectant according to Claims 1 to 5, **characterised by** a content of the organic, physiologically GRAS (Generally Recognised as Safe) acids.

7. A hand disinfectant according to Claim 6, **characterised by** a content of about 0.01 to 0.05 mol.-% organic acids.

## Revendications

1. Composition pour la désinfection des mains à base de monoalcools inférieurs et d'agents de synergie, **caractérisée par le fait qu'**il s'agit d'une solution aqueuse contenant de 50 à 60 % en volume d'un monoalcool choisi parmi l'éthanol et/ou le n-propanol, contenant un ou plusieurs agents de synergie choisis parmi les diols ou les sels de l'acide thiocyanique et ayant un point d'inflammation supérieur à 21 °C.

2. Composition pour la désinfection des mains selon la revendication 1, **caractérisée par le fait qu'**elle contient environ 57 % en volume d'éthanol.

3. Composition pour la désinfection des mains selon la revendication 1 ou 2, **caractérisée par le fait qu'**elle contient du propanediol et/ou du butanediol.

4. Composition pour la désinfection des mains selon l'une quelconque des revendications 1 à 3, **caractérisée par le fait qu'**elle contient du 1,2-propanediol et/ou du 1,3-butanediol.

5. Composition pour la désinfection des mains selon l'une quelconque des revendications 1 à 4, **caractérisée par le fait qu'**elle contient environ 5 à 10 % en volume de diols ou environ 1 à 3 % en poids d'un sel de l'acide thiocyanique.

6. Composition pour la désinfection des mains selon la revendication 1 à 5, **caractérisée par le fait qu'**elle contient un ou plusieurs acides organiques physiologiquement acceptables.

7. Composition pour la désinfection des mains selon la revendication 6, **caractérisée par le fait qu'**elle contient environ 0,01 à 0,05 % en moles d'acides organiques.
